Europäisches Patentamt

European Patent Office

Office européen des brevets

Veröffentlichungsnummer: **0 285 080**
**A2**

## EUROPÄISCHE PATENTANMELDUNG

Anmeldenummer: 88105016.5

Int. Cl.⁴ **B29C 61/08** , B29C 49/00

Anmeldetag: 28.03.88

Priorität: 30.03.87 DE 3710548

Veröffentlichungstag der Anmeldung:
05.10.88 Patentblatt 88/40

Benannte Vertragsstaaten:
AT BE CH DE FR GB IT LI NL SE

Anmelder: RXS Schrumpftechnik-Garnituren
GmbH
Profilstrasse 4
D-5800 Hagen 1(DE)

Erfinder: Schneider, Reiner, Ing.(grad)
Am Holderbusch 20
D-5800 Hagen 1(DE)

Vertreter: Mehl, Ernst, Dipl.-Ing. et al
Postfach 22 13 17
D-8000 München 22(DE)

Vorrichtung zum Aufweiten von Schrumpfschläuchen.

Bei der Erfindung handelt es sich um eine Vorrichtung zur Aufweitung von Schrumpfschläuchen, bei der der Schrumpfschlauch in erwärmtem Zustand durch Innenüberdruck während des fortlaufenden Transportes aufgeweitet wird. Die Führung des Schrumpfschlauches erfolgt dabei an den Innenflächen der hintereinander angeordneten Schubdüsen (SD), wobei ein Transportmedium über Strömungskanäle (SK) zwischen der Innenwandung der Schubdüsen (SD) und der Außenwandung des zu weitenden Schrumpfschlauches eingeleitet wird.

FIG 1

EP 0 285 080 A2

## Vorrichtung zum Aufweiten von Schrumpfschläuchen.

Die Erfindung betrifft eine Vorrichtung zur Aufweitung von Schrumpfschläuchen. bei der der Schrumpfschlauch im erwärmten Zustand durch Innendruck während des fortlaufenden Transportes aufgeweitet wird, wobei die Führung des aufzuweitenden Schrumpfschlauches aus einer Mehrzahl hintereinander liegender Hohlkörper gebildet ist.

Eine derartige Vorrichtung ist bereits aus der DE-OS 34 31 287 bekannt. Dort weist diese Vorrichtung eine Führung für den aufzuweitenden Schrumpfschlauch in der Temperierzone auf, die aus einer Mehrzahl hintereinander angeordneter Hohlzylinder kurzer Länge besteht. Dabei sind die dem Schrumpfschlauch zugewandten Wandteile als druckbeaufschlagte Feinsiebe ausgebildet. Dabei bildet das aus den Feinsieben austretende Temperiermittel um den Schrumpfschlauch herum einen feinen Film und sorgt durch automatische Druckregelung dafür, daß der Schrumpfschlauch sich in der Lage zu den Hohlzylindern zentriert. Im Inneren des Schrumpfschlauches herrscht ein Gasüberdruck, so daß der Schrumpfschlauch von innen her an die sich erweiternde Führung aufgeblasen und dadurch erweitert wird. Problematisch ist hierbei der Medientransport durch die zylindrischen Feinsiebe, so daß hier unter Umständen Unregelmäßigkeiten auftreten können.

Aufgabe der Erfindung ist nun, eine Aufweitevorrichtung für Schrumpfschläuche zu schaffen, deren Transportsystem für den Schrumpfschlauch im Aufweitungsbereich glatte Führungsflächen aufweist und bei dem eine problemlose Einführung eines Transport-bzw. Schmiermediums erfolgen kann. Die gestellte Aufgabe wird nun mit einer Vorrichtung der eingangs erläuterten Art dadurch gelöst, daß jeder Hohlkörper als Schubdüse im Inneren ringförmig gleichmäßig verteilt einmündende Strömungskanäle für ein Transportmedium aufweist, deren Einmündungsöffnungen vorzugsweise in Transportrichtung verlaufen und im Bereich der Aufweitstelle der Schubdüse zwischen dem Einlaufbereich und dem Weitungsbereich angeordnet sind.

Die wesentlichen Bestandteile der Vorrichtung gemäß der Erfindung und die Aufweittechnologie selbst unterscheiden sich trotz der Ähnlichkeiten zum oben genannten Stand der Technik sehr deutlich voneinander. Statt der oben genannten druckbeaufschlagten Feinsiebe werden nun Schubdüsen mit definierten Strömungskanälen in Form von Bohrungen verwendet. Die Vorrichtung setzt sich nun aus einem Führungssystem zusammen, daß aus einer Vielzahl, zum Beispiel 30 Stück, solcher Schubdüsen zusammengestellt ist. Dabei überträgt jede dieser Schubdüsen auf den aufzuweitenden Schlauch eine Schubkraft in Durchlaufrichtung des Schlauches, der durch die Schleppströmung des Transportmediums hervorgerufen wird. Das nötige Transportmedium strömt durch die Bohrungen, die ringförmig an der Aufweitstelle der Schubdüsen angeordnet sind, in den Ringspalt zwischen dem Schrumpfschlauch und der Zylinderwand der Schubdüse. Die hohe Strömungsgeschwindigkeit des eingespritzten Transportmediums bewirkt eine Druckreduzierung und damit eine Differenzdruckerhöhung zwischen dem Schlauchinnendruck im Inneren des Schrumpfschlauches und dem Druck, der auf die Außenfläche des Schrumpfschlauches wirkt. Eine zweckmäßige Druckeinstellung hat zur Folge, daß die statische Druckdifferenz zwischen dem Schlauchinnendruck und dem Umgebungsdruck ausreicht, um den Schrumpfschlauch im erwärmten und aufgeweiteten Zustand zu halten. Die oben beschriebene Differenzdruckerhöhung, die durch die Durchströmung der Schubdüse hervorgerufen wird, bewirkt die Aufweitung des Schrumpfschlauches innerhalb der Schubdüse. Damit erfolgt die Aufweitung in derart definierten Schritten von Düse zu Düse entsprechend der jeweiligen Kalibrierung. Die gleichmäßig über den Umfang der Schubdüse verteilten Bohrungen für den Einlaß des Transportmediums sind alle gleich lang und haben gleiche Durchmesser, so daß ringsum gleichmäßige Bedingungen für die einwirkende Strömung zu erwarten sind. Auf diese Weise wird der Schrumpfschlauch konzentrisch in der Schubdüse geführt und über den Umfang ausreichend gleichmäßig geschleppt und aufgeweitet. Der Austrittsdurchmesser jeder Schubdüse entspricht ungefähr dem Einlaufdurchmesser der in Durchlaufrichtung nachfolgenden weiteren Schubdüse. Die Erweiterung innerhalb der Schubdüse erfolgt im Bereich der Einmündungen der Bohrungen für das Transportmedium. Jeweils im Eintrittsbereich des Schlauches sind in jeder Düse zusätzliche Schmierbohrungen vorgesehen, die eine unzulässig hohe Reibung zwischen dem Schrumpfschlauch und der Schubdüsenwandung verhindern. zur Reibungsverminderung kann in diesem Bereich auch eine Buchse aus einem Feinsieb, zum Beispiel aus einem Sintermetall eingesetzt werden, durch welches das Schmiermittel eingebracht werden kann. Bei Bedarf können weitere derartige Schmiermitteleinlaßbereiche vorgesehen werden.

Bei der Aufweitungsvorrichtung gemäß der Erfindung müssen nicht alle Schubdüsen als Weitungsdüsen mit erweitertem Durchmesser ausgebildet sein. So werden insbesondere zu Beginn der Aufweitvorrichtung Schubdüsen mit durchgehend gleichem Durchmesser verwendet, da in diesem Bereich zunächst der zu weitende Schrumpfschlauch auf die erforderliche Dehnungstemperatur (Kristallschmelzpunkt) gebracht werden muß. So werden zum Beispiel diese Schubdüsen als Heizelemente ausgebildet, durch die das Aufheizen des Schrumpfschlauches erfolgt. So dient auch das Transportmedium, vorzugsweise Polyglykol, als Heizmedium, das mit großer Geschwindigkeit durch die Strömungskanäle eingepreßt wird. Dies hat nicht nur eine Schubwirkung, sondern auch vor allem eine intensive und über den Umfang gleichmäßige Wärmezufuhr zur Folge. Außerdem wird die Reibung des Schrumpfschlauches entlang der Düsenwandung vermindert.

Die Erfindung wird nun anhand von drei Figuren näher erläutert.

Figur 1 zeigt eine Schubdüse, die in einem Düsengehäuse eingebaut ist.

Figur 2 deutet den Aufbau der gesamten Vorrichtung an.

Figur 3 zeigt eine Schubdüse in konischer Ausführungsform.

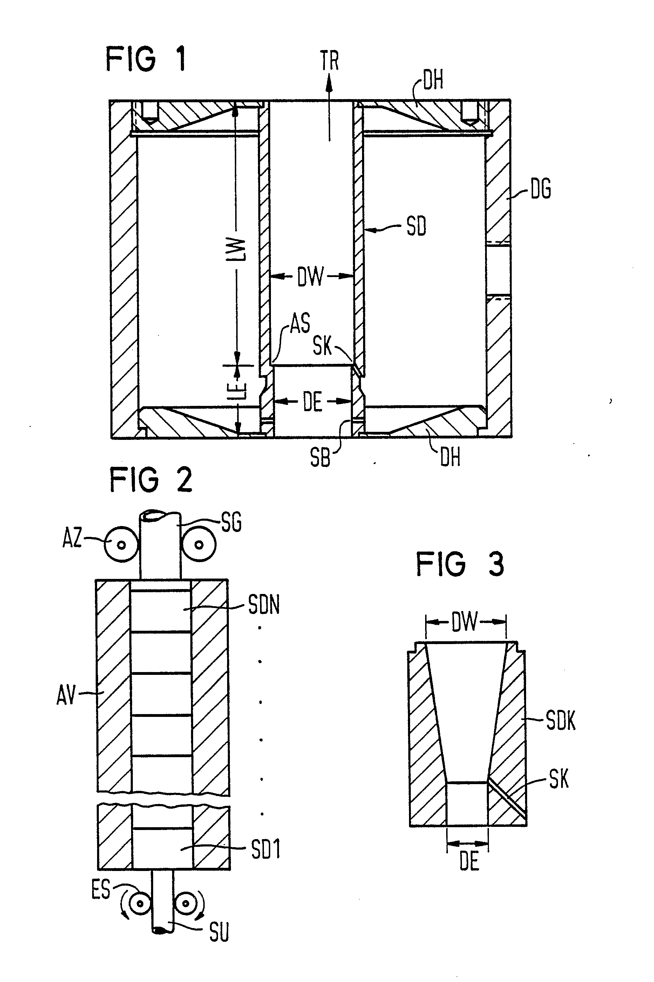

Die Figur 1 zeigt eine Schubdüse SD, die in einem Düsengehäuse DG gehaltert ist, so daß sie als Baueinheit mit einer nächstfolgenden zusammengekoppelt werden kann. Dabei erweitern sich jeweils die Innendurchmesser der Schubdüsen SD, so daß durch Aneinandersetzen dieser Schubdüsen SD die Vorrichtung so ergänzt werden kann, bis der gewünschte und dem Material des zu weitenden Schrumpfschlauches entsprechende Schlauchdurchmesser erreicht ist. In dieser Figur 1 ist die Transportrichtung TR für den zu weitenden Schrumpfschlauch angegeben und daraus folgt, daß der Eingangsduchmesser DE jeweils kleiner ist als der Weitungsdurchmesser DW am Ende jeder Schubdüse SD. An der Aufweitstelle AS erfolgt die pro Schubdüse SD erreichbare Durchmessererweiterung. Weiterhin werden hier auch Strömungskanäle SK eingeleitet, durch die das Transportmedium, zum Beispiel ein Polyglykol für die Erzeugung einer Schleppströmung eingeleitet wird. Die Strömungskanäle SK sind ringförmig über den Durchmesser hin gleichmäßig verteilt angeordnet und sind zweckmäßigerweise in Transportrichtung TR ausgerichtet. Damit wird der Ringspalt zwischen der inneren Düsenwandung und dem - hier nicht gezeigten - Schrumpfschlauch mit dem Transportmedium durchströmt, so daß hierdurch der Schrumpfschlauch mit möglichst geringer Reibung entlang geschleppt wird. Des weiteren sind im Einlaufbereich LE Schmierbohrungen SB angedeutet, durch die eine Flüssigkeit, wie zum Beispiel Polyglykol zur weiteren Reibungsverminderung eingeführt werden kann. Die einzelnen Schubdüsen SD werden je nach ihrem Durchmesser mit angepaßten Düsenhalterungen DH im Düsengehäuse DG gehalten.

Die Strömungskanäle (SK) können auch in mehreren nacheinanderfolgenden Reihen angeordnet werden, so daß auf diese Weise das Transportmedium in mehreren Stufen eingeführt werden kann. Dadurch kann der Transport noch kontinuierlicher gestaltet werden.

Weiterhin ist es möglich, die einzelnen Strömungskanäle als umlaufende Ringdüse auszubilden, wodurch ein kontinuierliches Einströmen über den Umfang hinweg erreicht werden kann.

Die Figur 2 zeigt das Bausteinprinzip der Aufweitungsvorrichtung AV nach der Erfindung. Es werden je nach Aufweitungsbedarf und je nach Aufweitungsvermögen des verwendeten Materials mehrere Schubdüsen SD1 bis SDn mit jeweils vergrößertem Führungsdurchmesser hintereinander montiert. Am Einlaufbereich LE der Aufweitevorrichtung AV ist der ungeweitete Schrumpfschlauch SU angedeutet, der mittels einer Einschubvorrichtung ES eingeführt wird, während am oberen Ende mit Hilfe einer Abzugsvorrichtung AZ der geweitete Schrumpfschlauch SG abgezogen und weitergeleitet wird.

Die Figur 3 zeigt nun in Ergänzung eine Schubdüse SDK mit konisch verlaufendem Innendurchmesser, wodurch der Einlaufdurchmesser DE kontinuierlich auf den Weitungsdurchmesser DW vergrößert wird. An der Aufweitstelle erfolgt ebenfalls die Einleitung der Strömungskanäle SK für die Einleitung eines Transportmediums.

Anhand eines Ausführungsbeispiels wird die Vorrichtung näher erläutert. Bei der Verwendung eines Polyethylen-Compounds für einen Schrumpfschlauch mit einem Ausgangsdurchmesser von 10,4 mm und einer Stärke von 0,8 mm werden zum Beispiel für die Aufweitung auf einen Weitungsdurchmesser von 22,3 mm und einer Stärke von 0,35 mm folgende Medien und Daten verwendet:

Transportmedium: Polyethylenglykol
Aufheiztemperatur: 120° C
Anzahl der Schubdüsen: 20
Durchmesser der Schubdüsen: 11,5 bis 20 mm
Anzahl der Strömungskanäle: 12 bei 30° - Teilung
Druck vor den Strömungskanälen: 1,2 bar
Einschubgeschwindigkeit: 10,0 m/min
Auszugsgeschwindigkeit: 9,3 m/min
Schrumpf in Längsrichtung nach Expansion: 1 %

**Ansprüche**

1. Vorrichtung zur Aufweitung von Schrumpfschläuchen, bei der der Schrumpfschlauch in erwärmtem Zustand durch Innenüberdruck während des fortlaufenden Transportes aufgeweitet wird, wobei die Führung des aufzuweitenden Schrumpfschlauches aus einer Mehrzahl hintereinander liegender Hohlkörper gebildet ist,

**dadurch gekennzeichnet,**

daß jeder Hohlkörper als Schubdüse (SD) im Inneren ringförmig, gleichmäßig verteilt einmündende Strömungskanäle (SK) für ein Transportmedium aufweist, deren Einmündungsöffnungen in Transportrichtung verlaufen und im Bereich der Aufweitstelle (AS) der Schubdüse (SD) zwischen dem Einlaufbereich (LE) und dem Weitungsbereich (LW) angeordnet sind.

2. Vorrichtung nach Anspruch 1,

**dadurch gekennzeichnet,**

daß die Schubdüsen (SD) eine zylindrisch geformte Führungsfläche aufweisen und daß die Erweiterung vom Einlaufdurchmesser (DE) zum Weitungsdurchmesser (DW) sprunghaft erfolgt.

3. Vorrichtung nach Anspruch 1,

**dadurch gekennzeichnet,**

daß die Führungsfläche der Schubdüse (SDK) vom Einlaufdurchmesser (DE) zum Weitungsdurchmesser (DW) kontinuierlich in konischer Form ausgebildet ist.

4. Vorrichtung nach einem der vorhergehenden Ansprüche, **dadurch gekennzeichnet,**

daß der Weitungsdurchmesser (DW) einer Schubdüse (SD) dem Einlaufdurchmesser (DE) der nachfolgenden Schubdüse (SD) entspricht.

5. Vorrichtung zur Aufweitung nach Anspruch 1,

**dadurch gekennzeichnet,**

daß zumindest einige Schubdüsen (SD) über ihre ganze Länge hinweg einen konstanten Führungsdurchmesser aufweisen.

6. Vorrichtung nach einem der vorhergehenden Ansprüche,

**dadurch gekennzeichnet,**

daß die Schubdüsen (SD) als gleichmäßig verteilte Strömungskanäle (SK) mindestens einen umlaufenden Ringspalt aufweisen.

7. Vorrichtung nach einem der vorhergehenden Ansprüche,

**dadurch gekennzeichnet,**

daß die Schubdüsen (SD) mehrere Reihen von Strömungskanälen (SK) aufweisen.

0 285 080

FIG 1

FIG 2

FIG 3